# EUROPEAN PATENT SPECIFICATION

(11) **EP 3 229 097 B1**
(45) Date of publication and mention of the grant of the patent: **24.10.2018**
(21) Application number: 16163954.7
(22) Date of filing: 06.04.2016
(51) Int. Cl.: G05G 1/405

(54) **VEHICLE PEDAL ASSEMBLY AND VEHICLE COMPRISING A VEHICLE PEDAL ASSEMBLY**
FAHRZEUGPEDALANORDNUNG UND FAHRZEUG MIT EINER FAHRZEUGPEDALANORDNUNG
ENSEMBLE DE PÉDALE DE VÉHICULE ET VÉHICULE COMPRENANT UN TEL ENSEMBLE

(43) Date of publication of application: 11.10.2017
(73) Proprietor: Volvo Car Corporation, 40 531 Göteborg (SE)
(72) Inventor: Kapocs, Mr. Marcel, 42942 Särö (SE); Malmgren, Thomas, 431 46 Mölndal (SE)
(74) Representative: Kransell & Wennborg KB

(56) References cited:
- CN-A- 101 780 792
- DE-C- 476 635
- JP-U- S5 745 464
- KR-A- 20020 042 365

## Description

### TECHNICAL FIELD

Embodiments herein relate to an vehicle pedal assembly. Embodiments herein further relate to a vehicle comprising a vehicle pedal assembly.

### BACKGROUND

Vehicles normally comprises pedals, or pedal assemblies, for allowing a user to control functions of the vehicle. Vehicles with a manual gearbox typically comprises an accelerator pedal, a pedal for control of a vehicle clutch and a brake pedal. Vehicles with an automatic gearbox often comprises an accelerator pedal and an brake pedal.

The accelerator pedal, also referred to as a gas pedal or a throttle, may control air and fuel supply to an engine of the vehicle, thereby allowing a vehicle operator to accelerate the vehicle. The clutch-pedal controls a vehicle clutch and the brake-pedal allows the vehicle operator to selectively apply vehicle brakes, such as drum brakes and/or disc-brakes. The pedals are often arranged to bias back to an idle position when not depressed by a the vehicle operator.

The pedals may be as "hanging pedals" or "standing pedals". Hanging pedals are arranged to be suspended from a bulkhead or firewall, separating an engine compartment from a passenger compartment. Such pedals typically have their respective pivot point relatively high, above a pad or surface the vehicle operator will place his/her foot on during pedal depression.

A standing pedal may also be referred to as a floor-mounted pedal. Such pedal may have a lower end which is attached to a base surface or floor surface. A floor mounted pedal typically has a pivot point at the lover end, i.e. at an intersection between the pedal and the floor surface.

KR 2002 0042365 A discloses an apparatus for adjusting a pedal of a vehicle in order to enhance the driving convenience of drivers by enabling a driver to adjust the height of the pedal using a simple method in which an electric switch is operated as an operating switch and a movable pedal plate is raised or lowered. A movable pedal plate is provided on the upper side of a slope plate of a pedal. A plurality of operating links link together the movable pedal plate and the slope plate via hinges. An arched gear portion is formed at one end of the operating links. A motor is provided with a worm gear, which engages the arched gear portion. The operating switch is provided to apply electric power to the motor.

CN 101 780 792 A discloses a vehicle pedal regulating device, that comprises a pedal installation plate, a forecabin installation plate, a connecting mechanism and a drive regulating mechanism. The pedal installation plate is used for placing the vehicle pedal. The forecabin installation plate is fixed on a forecabin plate of the vehicle. The pedal installation plate is connected with the forecabin installation plate by a connecting mechanism. The drive regulating mechanism is used for driving the pedal installation plate and drives the pedal installation plate and the connecting mechanism to move back and forth to realize back-and-forth regulation of the position of the vehicle pedal. A simple structure is applied to the regulating device to realize position regulation of the vehicle pedal. The back-and-forth regulation of the vehicle pedal is realized such that relative positions of the pedals stay unchanged and heights of the pedals to the ground stay unchanged.

Pedals of the above kind have worked well for a long time. However, there remains a need for an adjustable vehicle pedal assembly which provides increased flexibility and which can accommodate different vehicle operator needs and preferences, e.g. with regards to comfort and ergonomics. There also remains a need for an adjustable vehicle pedal assembly which is durable and reliable. Thus, improvements in the field of vehicle pedal assemblies are still desirable.

### SUMMARY

The invention concerns a vehicle pedal assembly according to claim 1 which is reliable and which can accommodate different vehicle operator needs and preferences.

According to the invention, this is provided by a vehicle pedal assembly having a base member attachable to a vehicle floor and a pedal element which is pivotal at the base member at an end thereof intended to face the vehicle floor between a rest position and at least one actuating position wherein it further comprises: an overlay element, that overlies the pedal element and is operatively connected thereto via a guide structure, arranged to allow guided movement of the overlay element away from and towards the pedal element; and an electrically controllable actuator arrangement operatively arranged to selectively produce a force between the overlay element and the pedal element for executing the guided movement of the overlay element selectively away from and towards the pedal element, and arranged to allow a user of an associated electrical control arrangement to selectively control the actuator arrangement to generate this force.

Since the overlay element is moveable away from and towards the pedal element via the electrically controllable actuator a user can select a position of the overlay element relatively the pedal element. Hereby the user can adjust the pedal assembly to fit his/her needs or preferences. For example, the user can increase the distance between the pedal element and the overlay element to move the overlay element rearwards in a passenger compartment. The overlay element will thus come closer to a seated vehicle operator and a vehicle operator with short legs can easily depress the pedal by depressing the overlay element. A vehicle operator with longer legs may adjust the overlay element to come closer to the pedal element, i.e. forward in the vehicle compartment. Hereby the user may adjust the distance between a vehicle seat and the pedal assembly without having to slide the seat forwards/backwards. This provides for increased adjustability, flexibility and ergonomics. Further, one standard-configured vehicle pedal assembly may be mounted in vehicles of different sizes/lengths without need for adjustments. This facilitates production and decreases costs.

According to some embodiments the electrically controllable actuator arrangement comprises an actuator motor a threaded actuator rod and a nut element, arranged to selectively, upon activation of the actuator motor, be translated at the threaded actuator rod to generate the force for executing the guided movement of the overlay element away from and towards the pedal element. An actuator arrangement with an actuator motor, a threaded actuator rod and a nut element has proven to be reliable and space-saving for the actuation of the overlay element.

According to some embodiments the overlay element as part of the guide structure comprises at least one flange extending towards the base member and has at least one guide track for slidingly receiving a complementary guide element associated with a part of the guide structure separate from the overlay element. The guide structure and the overlay element can be attached to each other or integrally formed. The overlay element can comprise e.g. one or two flanges with guide tracks. The guide tracks may be arranged to receive e.g. a guiding pin or similar which is part of the actuator arrangement. The guide track may also be configured to receive other parts of the guide structure, such as pins or similar which passively guides the overlay element during actuation of the actuator arrangement.

According to some embodiments each flange of the overlay element comprises at least a first and a second guide track, the first and second guide tracks being parallel to each other, and the complementary guide elements of the first and second guide tracks are slidingly received thereby such that they, during movement of the overlay element away from and towards the pedal element will move along the first and second guide tracks and maintain a main extension plane of the overlay element substantially in parallel to a main extension plane of the pedal element. Hereby the overlay element, which comprises the surface a user may depress, can have the substantially same orientation independently of the distance between the overlay element and the pedal element.

According to some embodiments the electrically controllable actuator arrangement comprises at least one cylinder/piston arrangement with telescopically variable length one end of which is attached to the pedal element and the other end of which is attached to the overlay element, the at least one cylinder/piston arrangement being arranged to selectively generate the force for executing the guided movement of the overlay element away from and towards the pedal element upon variation of its length via the electrical control arrangement. This provides for flexible and cost efficient adjustment of the overlay element.

According to some embodiments the guide structure is provided by the at least one cylinder/piston arrangement with telescopically variable length. The cylinder/piston can thus both guide the overlay element relatively the pedal element and actuate the overlay element into different positions relatively the pedal element.

According to some embodiments the vehicle pedal assembly further comprises user identification means, arranged to obtain information associated with a user and use this obtained information to identify the particular user and to use the associated electrical control arrangement to execute the guided movement of the overlay element to a pre-set position for the identified particular user. Hereby the pedal assembly efficiently and conveniently can be adjusted to fit user with different lengths of legs.

Embodiments herein also aim to provide a vehicle comprising an adjustable vehicle pedal assembly which is reliable and which can accommodate different vehicle operator needs and preferences. According to some embodiments, this is provided by a vehicle comprising a one or more adjustable vehicle pedal assembly according to embodiments disclosed herein.

### BRIEF DESCRIPTION OF THE DRAWINGS

The various aspects of embodiments herein, including its particular features and advantages, will be readily understood from the following detailed description and the accompanying drawings, in which:
Fig. 1a illustrates a vehicle pedal assembly according to some embodiments in a first position from a side-view,
Fig. 1b illustrates parts of the Fig. 1a vehicle pedal assembly from another angle,
Fig. 2a illustrates the Fig. 1a vehicle pedal assembly in a second position from a side-view,
Fig. 2b illustrates parts of the Fig. 2a vehicle pedal assembly from another angle,
Fig. 3 illustrates a vehicle pedal assembly according to some other embodiments,
and
Fig. 4 illustrates a vehicle comprising an adjustable vehicle pedal assembly.

### DETAILED DESCRIPTION

Embodiments herein will now be described more fully with reference to the accompanying drawings. Like numbers refer to like elements throughout. Well-known functions or constructions will not necessarily be described in detail for brevity and/or clarity.

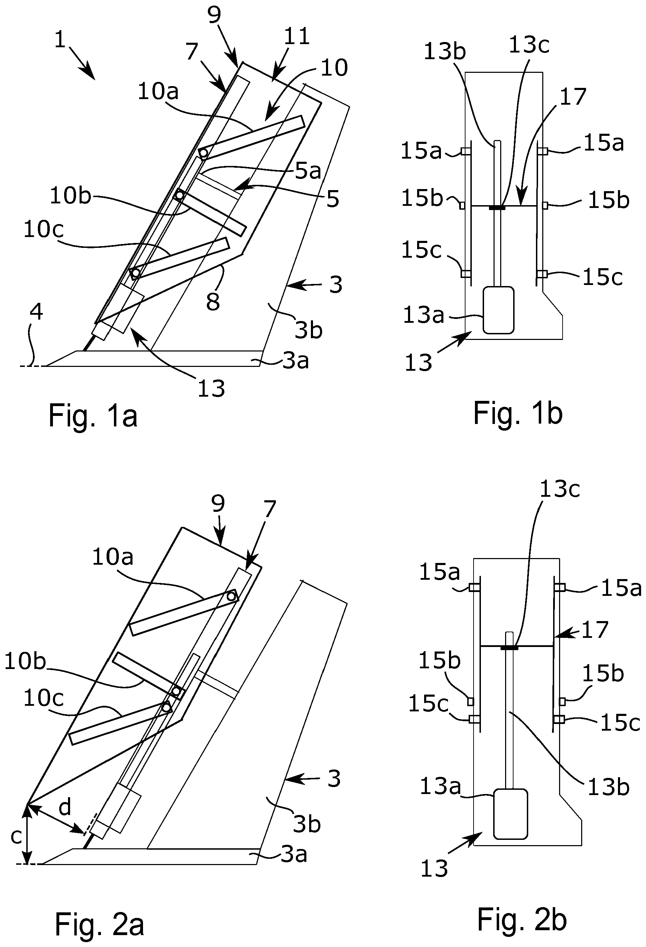

**Fig. 1a** and Fig. **2a** illustrate side views of a vehicle pedal assembly **1.** The vehicle pedal assembly 1 comprises or is attached to a base member **3.** The base member 3 can comprise a first portion **3a** which is arranged to be attached to a vehicle floor **4** when the pedal assembly 1 is mounted in a vehicle. The base member 3 can also comprise a second portion **3b** which extends out from the first portion 3a. The second portion 3b can receive or support a link arrangement **5** which can be comprised in or connected to the pedal assembly 1. The link arrangement 5 comprise a first link portion **5a** connected to the pedal assembly 1 and a second link portion (not shown) connectable to vehicle velocity parameter control means such as a throttle, brake, clutch or similar. The link arrangement is arranged to transfer a pivotal movement of a pedal element 7 to the vehicle velocity parameter control means.

The pedal element 7 is pivotal at the base member 3 at an end thereof and is arranged to face the vehicle floor or the base member 3 between a rest position and at least one actuating position. The pedal element 7 can be pivotally attached or coupled to the base member 3.

The pedal assembly 1 further comprises an overlay element **9.** The overlay element 9 is arranged to overlie the pedal element 7, i.e. the overlay element 9 can be arranged adjacent to the pedal element 7. The overlay element 9 is operatively connected to the pedal element 7 via a guide structure **11.** The guide structure 11 is arranged to allow guided movement of the overlay element 9 away from and towards the pedal element 7. In Fig. 1a the vehicle pedal assembly 1 is depicted in a first position, when the overlay element is positioned relatively close to the pedal element 7. In the embodiment illustrated in Fig. 1 a main extension plane of the overlay element 9 and a main extension plane of the pedal element 7 are arranged substantially in parallel to each other.

The pedal assembly 1 comprises an electrically controllable actuator arrangement **13.** The electrically controllable actuator arrangement 13 is operatively arranged to selectively produce a force between the overlay element 9 and the pedal element 7 for executing the guided movement of the overlay element 9 selectively away from and towards the pedal element 5. Hereby the electrically controllable actuator arrangement 13 is arranged to allow a user of an associated electrical control arrangement to selectively control the actuator arrangement 13 to generate this force.

The overlay element 9 can form a part of the guide structure 11. In the embodiment depicted in Fig. 1a the overlay element 9 comprises at least one flange 8 extending towards the base member 3. The at least one flange 8 comprises at least one guide track **10.** The at least one guide track 10 is arranged to receive a complementary guide element, discussed below.

In the embodiment illustrated in Fig. 1a the overlay element 9 comprises two flanges 8 (only one is visible in Fig. 1a). The flanges 8 extends substantially in parallel to each other from the overlay element 9 towards the base member 3. The flanges 8 and the overlay element 9 may together form a U-shape. The pedal element 7 is arranged between the flanges 8. The overlay element 9 may comprise other protruding elements than flanges, or only one flange or more than two flanges.

In the embodiment illustrated in Fig. 1a each flange 8 of the overlay element 9 comprises at least a first **10a** and a second **10c** guide track. Each flange can optionally also comprise a third guide track **10b.** The first 10a and second 10c guide tracks can be arranged parallel to each other and can be arranged to extend in an oblique angel from a middle portion of the overlay element 9. The third guide track may extend substantially perpendicular out from the middle portion of the overlay element 9. The middle portion can be arranged as a plate which connects the flanges 8. The middle portion may comprise a layer of friction material, protrusions or similar such that a user is allowed to depress the middle portion of the overlay element 9 with a foot without slipping.

The second portion 3b of the base element and an electrically controllable actuator arrangement **13** are also illustrated in **Fig. 1b****.** The actuator arrangement 13 illustrated in Fig. 1b comprises an actuator motor **13a**, a threaded actuator rod **13b** and a nut element **13c.** The nut element 13c is arranged to selectively, upon activation of the actuator motor 13a, be translated along a length of the threaded actuator rod 13b and to generate the force for executing the guided movement of the overlay element (discussed in conjunction with Fig. 1a) away from and towards the pedal element.

In Fig. 1b are illustrated complementary guide elements **15a, 15b, 15c** associated with a part of the guide structure separate from the overlay element. Such part or parts 15 of the guide structure can for example be arranged as a carriage **17.** The carriage 17 can be connected or attached to the nut element 13c and arranged to be translated along the length of the actuator rod 13b together with the actuator nut element 13c. In some embodiments the guide elements can be arranged as pins 15a, 15b, 15c.

The guide elements 15, e.g. in form of the pins 15a, 15c, can move along the first 10a and second 10b guide tracks and maintain a main extension plane of the overlay element 9 substantially in parallel to a main extension plane of the pedal element 7 during movement of the overlay element away from and towards the pedal element. If the flanges comprises a third guide track 10b, the third pin 15b may be slidingly received therein.

Fig. 2a illustrates the vehicle pedal assembly 1 in a second position. In this second position the distance between the pedal element 7 and the overlay element 9 is larger than in the first position depicted in Fig. 1a. **Fig. 2b** illustrates the position of the actuator nut corresponding to the second position. In Fig. 2b also guide elements 15a, 15b, 15c and the actuator arrangement 13 with the actuator motor 13a, the threaded actuator rod 13b and the nut element 13c are illustrated.

With reference to the orientations illustrated in Fig. 1a, 1b, 2a and 2b, the actuator motor is arranged to actuate the actuator nut upwards, thereby pressing the overlay element 9 outwards to the left in Fig. 1a, 1b. The direction of the motion can be controlled by the direction of the guide tracks 10a, 10b, 10c. The distance between the pedal element 7 and the middle portion of the overlay element 9 can be dependent on a length of the guide tracks. In the embodiment illustrated in Fig. 1a and 1b the middle pin 15b can be attached to the pedal element 7 and an upper respectively lower pin 15a and 15c can be attached to the carriage 17. The relative distances between the pins 15 will change during the actuation of the carriage 17, as seen when comparing Figs. 1b and 2b.

In the second position, illustrated in Fig. 2a, the overlay element 9 is positioned at a distance **d** from the pedal element 7. The distance d can be e.g. in the range of 1-15 cm. Also a clearance c between the overlay element 9 and a floor surface may be determined by the design of the guide structure. The clearance c can be e.g. in the range of 0-10 cm. Clearance c and distance d can be controlled by the length and directions of the guide tracks 10a, 10b, 10c.

The overlay element 9 can be carried by the pedal assembly 1 without attachment to a floor surface. Hereby the vehicle pedal assembly 1 with the pedal element 7 and the overlay element 9 can be freely designed and it is easy to adapt the design after a particular car model by altering a direction or extension of the guide tracks 10.

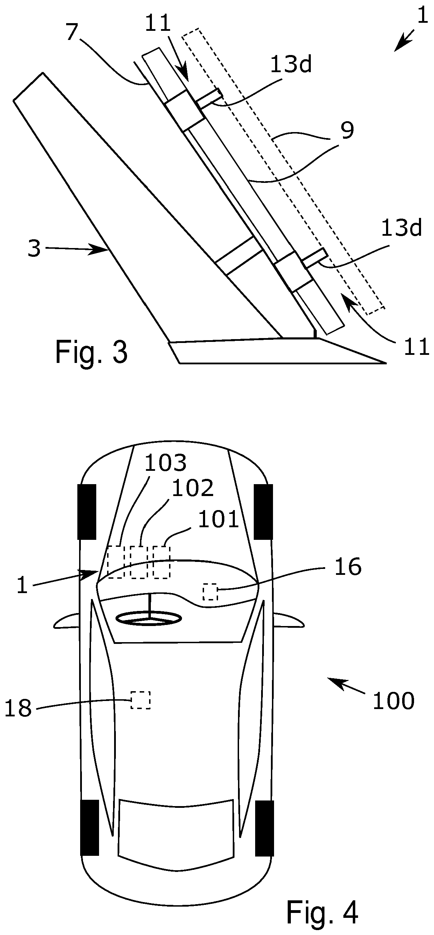

**Fig. 3** illustrates the vehicle pedal assembly 1 according to a further embodiment. In the embodiment illustrated in Fig. 3 the electrically controllable actuator arrangement 13 comprises at least one cylinder/piston arrangement **13d** with telescopically variable length. One end of the cylinder/piston arrangement 13d is attached to the pedal element 7 and the other end of which is attached to the overlay element 9.

The at least one cylinder/piston arrangement 13d is arranged to selectively generate the force for executing the guided movement of the overlay element 9 away from and towards the pedal element 7 upon variation of its length via the electrical control arrangement. The electrical control arrangement is schematically illustrated in Fig. 4.

In the embodiment illustrated in Fig. 3 the overlay element 9 is both guided and positioned by the at least one cylinder/piston arrangement 13d.The vehicle pedal assembly 1 depicted in Fig. 3 comprises two cylinder/piston arrangements 13d. Thus, the guide structure is provided by the at least one cylinder/piston arrangement 13d with telescopically variable length.

In Fig. 3 the overlay element 9 is illustrated in first position with solid lines and in the second position, actuated to be positioned at a distance from the pedal element 7, with dashed lines.

The vehicle pedal assembly 1 may comprise other kind of actuators operatively connecting the pedal element to the overlay element. The vehicle pedal assembly 1 may comprise e.g. a hydraulic fluid actuator, a pneumatic actuator, an electrical current actuator, a magnetic actuator or any combination thereof. Such actuators can actuate the overlay element e.g. via a thread/nut, a comb drive, an electric motor, a hydraulic cylinder, a piezoelectric actuator, a screw jack or similar.

**Fig. 4** illustrates a vehicle **100** which comprises one or more vehicle pedal assemblies 1 as described herein.

In some embodiments the vehicle pedal assembly with the actuator arrangement and overlay element is coupled to an accelerator pedal 101. In some embodiments the vehicle pedal assembly with the actuator arrangement and overlay element is coupled to a brake pedal 102. In some embodiments the vehicle pedal assembly with the actuator arrangement and overlay element is coupled to a clutch pedal 103.

In Fig. 4 an electrical control arrangement **16** is schematically illustrated. The electrical control arrangement can comprise a processor and a control interface such as a switch, a knob, a touchscreen icon or similar connected to the actuator arrangement for allowing a user to remotely control the actuator arrangement and thereby the position of the overlay element. The control interface can for example be arranged on or at a vehicle seat, dashboard, door interior or at any other suitable location.

According to the invention, the vehicle pedal assembly 1 comprises or is connected to user identification means **18.** Such user identification means 18 can comprise a camera arranged to monitor the passenger compartment. Such camera can comprise or be connected to a processor with logic for face and/or body and/or object recognition and/or classification.

The user identification means 18 may also/alternatively identify a particular user by detection of signals from a unique car key or electronic device associated with the particular user. The user identification means 18 may also/alternatively identify a particular user by assessment of information from a weight sensor or any other sensor configured for user identification.

The user identification means 18 is arranged to obtain information associated with a user and use this obtained information to identify the particular user and to use the associated electrical control arrangement to execute the guided movement of the overlay element to a pre-set position for the identified particular user. For example, if it is determined that a short user will drive the vehicle the overlay element can be positioned in the second position illustrated in Fig. 2a, i.e. relatively close to the vehicle operator seat. If it is determined that a long user will drive the vehicle the overlay element can be positioned in the first position illustrated in Fig. 2a, i.e. relatively far from the vehicle operator seat and relatively near the pedal element.

The vehicle pedal assembly 1 can comprise other guide structures than the examples given in conjunction with Figs. 1-3. For example, non-symmetrical elements can be interposed between the pedal element and the overlay element and actuate the overlay element into a predetermined position by rotation. In some embodiments the vehicle pedal assembly can comprise two or more elements arranged to co-operate with the same principle as a scissor lift.

With the design and configuration described in the embodiments above the vehicle pedal assembly 1 not only may be implemented in new vehicles but can also efficiently be retrofitted to be mounted on existing pedal elements 7 in existing vehicles.

## Claims

1. A vehicle pedal assembly (1) having a base member (3) attachable to a vehicle floor and a pedal element (7) which is pivotal at the base member (3) at an end thereof intended to face the vehicle floor between a rest position and at least one actuating position, which further comprises:
an overlay element (9), that overlies the pedal element (7) and is operatively connected thereto via a guide structure (11), arranged to allow guided movement of the overlay element (9) away from and towards the pedal element (7); and
an electrically controllable actuator arrangement (13) operatively arranged to selectively produce a force between the overlay element (9) and the pedal element (7) for executing the guided movement of the overlay element (7) selectively away from and towards the pedal element (9), and arranged to allow a user of an associated electrical control arrangement (16) to selectively control the actuator arrangement (13) to generate this force,
**characterized in that** it further comprises user identification means (18), arranged to obtain information associated with a user and use this obtained information to identify the particular user and to use the associated electrical control arrangement (16) to execute the guided movement of the overlay element (9) to a pre-set position for the identified particular user.

2. The vehicle pedal assembly (1) according claim 1 **wherein** the electrically controllable actuator arrangement (13) comprises, an actuator motor (13a),
a threaded actuator rod (13b) and a nut element (13c), arranged to selectively, upon activation of the actuator motor (13a), be translated at the threaded actuator rod (13b) to generate the force for executing the guided movement of the overlay element (9) away from and towards the pedal element (7).

3. The vehicle pedal assembly (1) according to claim 2 **wherein** the overlay element (9) as part of the guide structure (11) comprises at least one flange (8) extending towards the base member (3) and which has at least one guide track (10) for slidingly receiving a complementary guide element (15) associated with a part of the guide structure (11) separate from the overlay element (9).

4. The vehicle pedal assembly (1) according to claim 3 **wherein** each flange (8) of the overlay element (9) comprises at least a first (10a) and a second (10c) guide track, the first and second guide tracks (10a, 10c) being parallel to each other, and where the complementary guide elements (15a, 15c) of the first and second guide tracks (10a, 10c) are slidingly received thereby such that they, during movement of the overlay element (9) away from and towards the pedal element (7) will move along the first and second guide tracks (10a, 10c) and maintain a main extension plane of the overlay element (9) substantially in parallel to a main extension plane of the pedal element (7).

5. The vehicle pedal assembly (1) according claim 1 **wherein** the electrically controllable actuator arrangement (13) comprises at least one cylinder/piston (13d) arrangement with telescopically variable length one end of which is attached to the pedal element (7) and the other end of which is attached to the overlay element (9), the at least one cylinder/piston arrangement (13d) being arranged to selectively generate the force for executing the guided movement of the overlay element (9) away from and towards the pedal element (7) upon variation of its length via the electrical control arrangement (16).

6. The vehicle pedal assembly (1) according claim 5 **wherein** the guide structure (11) is provided by the at least one cylinder/piston (13d) arrangement with telescopically variable length.

7. A vehicle (100) **characterized in that** the vehicle (100) comprises one or more vehicle pedal assemblies (1) according to any of the preceding claims.

## Patentansprüche

1. Fahrzeugpedalanordnung (1) mit einem Basiselement (3), das an einem Fahrzeugboden anbringbar ist, und einem Pedalelement (7), das an dem Basiselement (3) an einem Ende davon schwenkbar ist mit der Absicht, dem Fahrzeugboden zwischen einer Ruheposition und mindestens einer auslösenden Position zugewandt zu sein, und die ferner Folgendes umfasst:
ein Überlagerungselement (9), welches das Pedalelement (7) überlagert und über eine Führungsstruktur (11) operativ damit verbunden ist, angeordnet, um eine geführte Bewegung des Überlagerungselements (9) weg von und hin zu dem Pedalelement (7) zu gestatten; und eine elektrisch steuerbare Auslöseranordnung (13), die operativ angeordnet ist, um wahlweise eine Kraft zwischen dem Überlagerungselement (9) und dem Pedalelement (7) zu gestatten, um die geführte Bewegung des Überlagerungselements (7) wahlweise weg von und hin zu dem Pedalelement (9) zu gestatten, und angeordnet ist, um einem Benutzer einer zugehörigen elektrischen Steueranordnung (16) zu gestatten, die Auslöseranordnung (13) wahlweise zu steuern, um diese Kraft zu erzeugen,
**dadurch gekennzeichnet, dass** sie ferner ein Benutzeridentifikationsmittel (18) umfasst, das angeordnet ist, um einem Benutzer zugehörige Informationen zu beschaffen und diese beschafften Informationen zu nutzen, um den bestimmten Benutzer zu identifizieren, und die zugehörige elektrische Steueranordnung (16) zu nutzen, um die geführte Bewegung des Überlagerungselements (9) in eine voreingestellte Position für den identifizierten bestimmten Benutzer auszuführen.

2. Fahrzeugpedalanordnung (1) nach Anspruch 1, wobei die elektrisch steuerbare Auslöseranordnung (13) einen Auslösermotor (13a), eine mit einem Gewinde versehene Auslöserstange (13b) und ein Mutternelement (13c) umfasst, angeordnet, um wahlweise nach Aktivierung des Auslösermotors (13a) an der mit einem Gewinde versehenen Auslöserstange (13b) verschoben zu werden, um die Kraft zum Ausführen der geführten Bewegung des Überlagerungselements (9) weg von und hin zu dem Pedalelement (7) zu erzeugen.

3. Fahrzeugpedalanordnung (1) nach Anspruch 2, wobei das Überlagerungselement (9) als Teil der Führungsstruktur (11) mindestens einen Flansch (8) umfasst, der sich hin zu dem Basiselement (3) erstreckt und der mindestens eine Führungsbahn (10) zum verschiebbaren Aufnehmen eines ergänzenden Führungselements (15), das einem Teil der Führungsstruktur (11) separat von dem Überlagerungselement (9) zugehörig ist, aufweist.

4. Fahrzeugpedalanordnung (1) nach Anspruch 3, wobei jeder Flansch (8) des Überlagerungselements (9) mindestens eine erste (10a) und eine zweite (10c) Führungsbahn umfasst, wobei die erste und die zweite Führungsbahn (10a, 10c) parallel zueinander verlaufen, und wobei die ergänzenden Führungselemente (15a, 15c) der ersten und der zweiten Führungsbahn (10a, 10c) dabei verschiebbar so aufgenommen werden, dass sie sich während der Bewegung des Überlagerungselements (9) weg von und hin zu dem Pedalelement (7) entlang der ersten und zweiten Führungsbahn (10a, 10c) bewegen werden und eine Hauptausdehnungsebene des Überlagerungselements (9) aufrechterhalten, die im Wesentlichen parallel zu einer Hauptausdehnungsebene des Pedalelements (7) ist.

5. Fahrzeugpedalanordnung (1) nach Anspruch 1, wobei die elektrisch steuerbare Auslöseranordnung (13) mindestens eine Zylinder-/Kolbenanordnung (13d) mit teleskopisch variabler Länge umfasst, deren eines Ende an dem Pedalelement (7) und deren anderes Ende an dem Überlagerungselement (9) angebracht ist, wobei die mindestens eine Zylinder-/Kolbenanordnung (13d) so angeordnet ist, dass sie wahlweise die Kraft zum Ausführen der geführten Bewegung des Überlagerungselements (9) weg von und hin zu dem Pedalelement (7) bei Änderung ihrer Länge über die elektrische Steueranordnung (16) erzeugt.

6. Fahrzeugpedalanordnung (1) nach Anspruch 5, wobei die Führungsstruktur (11) durch die mindestens eine Zylinder-/Kolbenanordnung (13d) mit teleskopisch variabler Länge bereitgestellt ist.

7. Fahrzeug (100), **dadurch gekennzeichnet, dass** das Fahrzeug (100) eine oder mehrere Fahrzeugpedalanordnungen (1) nach einem der vorangehenden Ansprüche umfasst.

## Revendications

1. Ensemble de pédale de véhicule (1) ayant un élément de base (3) pouvant être fixé à un plancher de véhicule et un élément de pédale (7) qui peut pivoter au niveau de l'élément de base (3) au niveau d'une extrémité de celui-ci destiné à faire face au plancher de véhicule entre une position de repos et au moins une position d'actionnement, qui comprend en outre :
un élément de recouvrement (9), qui recouvre l'élément de pédale (7) et y est relié fonctionnellement par l'intermédiaire d'une structure de guidage (11), conçue pour permettre un mouvement guidé de l'élément de recouvrement (9) à l'opposé de et vers l'élément de pédale (7) ; et
un agencement d'actionnement (13) pouvant être commandé électriquement conçu fonctionnellement pour produire sélectivement une force entre l'élément de recouvrement (9) et l'élément de pédale (7) pour exécuter le mouvement guidé de l'élément de recouvrement (7) sélectivement à l'opposé de et vers l'élément de pédale (9), et conçu pour permettre à un utilisateur d'un agencement de commande électrique (16) associé de commander sélectivement l'agencement d'actionnement (13) pour générer cette force,
**caractérisé en ce qu'**il comprend en outre un moyen d'identification d'utilisateur (18), conçu pour obtenir des informations associées à un utilisateur et utiliser ces informations obtenues pour identifier l'utilisateur particulier et pour utiliser l'agencement de commande électrique associé (16) pour exécuter le mouvement guidé de l'élément de recouvrement (9) vers une position prédéfinie pour l'utilisateur particulier identifié.

2. Ensemble de pédale de véhicule (1) selon la revendication 1, l'agencement d'actionnement (13) pouvant être commandé électriquement comprenant un moteur d'actionnement (13a), une tige d'actionnement filetée (13b) et un élément d'écrou (13c), conçu pour être déplacé sélectivement, lors de l'activation du moteur d'actionnement (13a), au niveau de la tige d'actionnement filetée (13b) pour générer la force pour exécuter le mouvement guidé de l'élément de recouvrement (9) à l'opposé de et vers l'élément de pédale (7).

3. Ensemble de pédale de véhicule (1) selon la revendication 2, l'élément de recouvrement (9) en tant que partie de la structure de guidage (11) comprenant au moins une bride (8) s'étendant vers l'élément de base (3) et qui a au moins une piste de guidage (10) pour recevoir de manière coulissante un élément de guidage complémentaire (15) associé à une partie de la structure de guidage (11) séparée de l'élément de recouvrement (9).

4. Ensemble de pédale de véhicule (1) selon la revendication 3, chaque bride (8) de l'élément de recouvrement (9) comprenant au moins une première (10a) et une seconde (10c) piste de guidage, les première et seconde pistes de guidage (10a, 10c) étant parallèles l'une à l'autre, et les éléments de guidage complémentaires (15a, 15c) des première et seconde pistes de guidage (10a, 10c) étant reçus de manière coulissante de sorte que, pendant le mouvement de l'élément de recouvrement (9) à l'opposé de et vers l'élément de pédale (7), ils se déplacent le long des première et seconde pistes de guidage (10a, 10c) et maintiennent un plan d'extension principal de l'élément de recouvrement (9) sensiblement en parallèle à un plan d'extension principal de l'élément de pédale (7).

5. Ensemble de pédale de véhicule (1) selon la revendication 1, l'agencement d'actionnement (13) pouvant être commandé électriquement comprenant au moins un agencement cylindre/piston (13d) ayant une longueur télescopique variable dont une extrémité est fixée à l'élément de pédale (7) et l'autre extrémité est fixée à l'élément de recouvrement (9), l'au moins un agencement cylindre/piston (13d) étant conçu pour générer sélectivement la force pour exécuter le mouvement guidé de l'élément de recouvrement (9) à l'opposé de et vers l'élément de pédale (7) lors d'une variation de sa longueur par l'intermédiaire de l'ensemble de commande électrique (16).

6. Ensemble de pédale de véhicule (1) selon la revendication 5, la structure de guidage (11) étant fournie par l'au moins un agencement cylindre/piston (13d) ayant une longueur télescopique variable.

7. Véhicule (100) **caractérisé en ce que** le véhicule (100) comprend un ou plusieurs ensembles de pédale de véhicule (1) selon l'une quelconque des revendications précédentes.
